# EUROPEAN PATENT APPLICATION

(11) **EP 1 225 071 A1**
(43) Date of publication of application: **24.07.2002**
(21) Application number: 01129081.4
(22) Date of filing: 07.12.2001
(51) Int. Cl.: B60H 1/00

(54) **Unit for conditioning and distributing air in the passenger compartment of a motor vehicle**

(30) Priority: 19.01.2001 IT TO010036
(71) Applicant: DENSO THERMAL SYSTEMS S.p.A., 10046 Poirino (Torino) (IT)
(72) Inventor: Toscano Rivalta, Giovanni, 10023 Chieri (Torino) (IT); Nalon, Massimo, 10064 Riva di Pinerolo (Torino) (IT); Carbone, Andrea, 10129 Torino (IT)
(74) Representative: Marchitelli, Mauro

(57) **Abstract**

Unit for conditioning and distributing air in the passenger compartment of a motor vehicle with front and rear seats, comprising: a cold air flow collection chamber (26) downstream to the evaporator (14) with reference to the direction of movement of the air flow, an air flow heating unit (18, 20), a hot air flow collection chamber (28), arranged downstream to the heating unit (18, 20), a longitudinal separation wall splitting the front seat unit into two separate areas for the driver and the front seat passenger, respectively, a rear seat air flow mixing chamber (54) communicating with the hot flow collection chamber (28) and a cold flow collection channel (60) extending under said heating unit (18, 20) and communicating with a first end of said cold flow collection chamber (26) and with a second end of the rear seat mixing chamber (54).

## Description

This invention relates to a unit for conditioning and distributing air in the passenger compartment of a motor vehicle, with front and rear seats. More precisely, the invention relates to a unit which can be used to independently adjust the temperature and distribution of the conditioned air flow directed to the front seats and to the rear seats.

Various air conditioning assemblies for motor vehicles allowing the front seat and rear seat passengers to adjust the air flow and to select the flow distribution of conditioned air (frontal distribution, directed towards the feet or, towards the windscreen for front seat passengers only) have been presented in the past. In order to obtain possibility of adjusting temperature and air flow distribution in a differentiated way, the air flow distribution system must be split into a number of independent areas, corresponding to the number of passenger compartment areas equipped with the separate adjustment feature. This need entails complications from the point of view of construction and a considerable increase in the size of the air flow distribution system with respect to a system without separate rear seat adjustment.

The objective of this invention is to provide an air conditioning and distributing system with separate adjustment for the driver, the front passenger and the rear passengers, which is simpler and more compact than the known solutions.

According to this invention, this objective is attained by means of a unit which characteristics are described in the main claim.

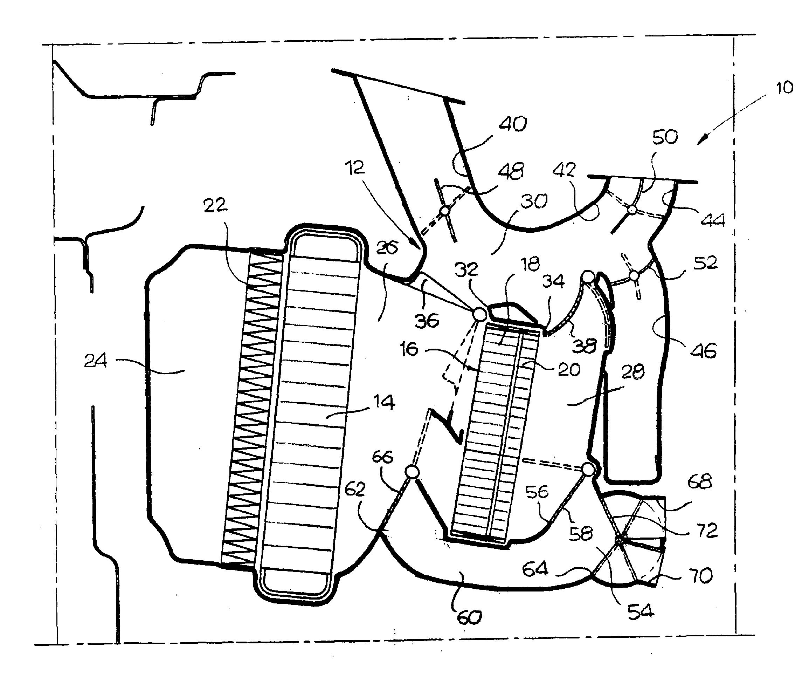

This invention will be better explained by the following detailed descriptions with reference to the accompanying figure as non-limiting example, illustrating a schematic longitudinal cross-section of the unit according to this invention.

With reference to the figure, numeral 10 generically indicates a unit for conditioning and distributing air in the passenger compartment of a motor vehicle. The unit 10 comprises a plastic material enclosure 12, containing air flow conditioning means, consisting of an evaporator 14 and a heating unit 16. In the example shown in the figure, the heating unit 16 comprises a radiator 18 and an electrical heater 20. A filter 22 is arranged upstream to the evaporator.

The enclosure 12 creates an inlet chamber 24 for the air to be conditioned and, downstream to the evaporator 14, a cold air flow collection chamber 26. The enclosure 12 also creates a hot air collection chamber 28, downstream to the heater unit 18, 20, and a front seat air flow mixing chamber 30. The mixing chamber 30 is arranged over the heater 18, 20 and communicates with the cold air collection chamber 26 and with the cold air flow collection chamber 28 via apertures 32, 34 equipped with adjustable mixing flaps 36, 38.

The front seat air flow mixing chamber 30 also communicates with a distribution channel 40, which sends the air flow to the base of the windscreen and with a channel 42 for distributing the air flow to the front seats. The channel 42 is split into a channel 44, which sends the air flow to the front vents (not shown), and into a channel 46, which sends the air flow to the feet of the passengers occupying the front seats. The distribution channels 40, 44 and 46 are equipped with respective distribution flaps 48, 50, 52.

The part of the air flow conditioning and distributing unit described to this point can be used to adjust the temperature and the distribution of the air flow directed towards the front seats. Preferably, this part of the conditioning and distributing unit presents a longitudinal separation wall (not shown), splitting the unit 10 in the transversal direction in two areas which can be adjusted in a reciprocally separate way for mixing and distributing the air flows destined to the driver and to the front seat passenger in the motor vehicle.

The conditioning and distributing unit 10 also comprises a chamber 54 for mixing the flow of air destined to be sent to the rear seat passengers in the vehicle. The mixing chamber 54 is arranged under the channel 46 for distributing the air flow towards the feet of the passengers in the front seats. The mixing chamber 54 communicates with the hot air flow collection chamber 28 via an aperture 56, which is equipped with a flap 58 which can assume an open position (shown with the dotted line) and a closed position (shown with the solid line). As shown below, the flap 58 is closed when the user wants to exploit the maximum power of the heater unit 18, 20, for fast windscreen defrosting.

The conditioning and distributing unit 10 comprises a channel 60 for collecting the cold air flow for the rear seats. The collection channel is extended under the heater unit 18, 20. One end communicates with the cold air flow collection chamber 26 and a second end 64 communicates with the rear seat air flow mixing chamber 54. An adjustable mixing flap 66 is arranged on the first end of the collection chamber 60. The rear seat air flow mixing chamber 54 communicates with two outlet conduits 68, 70, which convey the air flow towards the upper part and towards the feet of the rear seat passengers, respectively. An adjustable distribution flap 72 is used to adjust the air flows directed to the distribution conduits 68, 70.

The operation of the distribution unit 10 according to this invention is described below.

A fan (not shown) sends a flow of air to be conditioned into the inlet chamber 24. This flow of air is filtered by the filter 24 and cooled and dehumidified during the passage through the evaporator 14. The mixing flaps 36, 38 are used to adjust the air flow temperature, which is collected in the front seat air flow mixing chamber 30, considering that the cold air from collection chamber 26 is mixed with the hot air from chamber 28 (downstream to the heater unit 18, 20) in the mixing chamber 30.

The opening or closing angle of the mixing flap 66 is used to adjust the temperature of the air flow, which is collected in the rear seat air flow mixing chamber 54. This is because, when the mixing flap 66 is in the position illustrated by the solid line, the collection channel 60 is not crossed by a flow of cold air, and when the flap 58 is in the position illustrated by the dotted line, a flow of hot air, which has crossed the lower part of the heater unit 18, 20, reaches the mixing chamber 54. By varying the position of the distribution flap 72, the flow of air can be directed towards the rear seats either to the upper part or to the feet of the rear seat passengers. When the distribution flap 66 is in the position illustrated with a dotted line, only a flow of cold air reaches the mixing chamber 54 because the flap 66 entirely cuts off the flow of air which would cross the lower part of the heater unit 18, 20. The flap 66 can assume any intermediate position between the extreme positions shown in the figure to vary the temperature of the flow of air which is collected in the mixing chamber 54 between a minimum temperature and a maximum temperature.

The fast windscreen defrosting function can be obtained very simply with the unit according to this invention. In order to obtain this function, the flow of air, which would normally be used for the rear seats, is directed towards the distribution conduit 40. To obtain the fast defrosting function, the flaps 66 and 58 are arranged in the position shown with the solid line in which they close apertures 62 and 56 respectively. In this way, the entire flow of air is collected in the upper mixing chamber 30. This flow can consequently be directed towards the base of the window by closing the distribution flaps 50, 52.

## Claims

1. Unit for conditioning and distributing air in the passenger compartment of a motor vehicle with front and rear seats, comprising:
- an input chamber (24) of an air flow to be conditioned,
- an evaporator (14) arranged so to be crossed by said flow of air to be conditioned,
- a cold air flow collection chamber (26) downstream to the evaporator (14) with reference to the direction of movement of the air flow,
- an air flow heating unit (18, 20),
- a hot air flow collection chamber (28), arranged downstream to the heating unit (18, 20),
- an adjustable mixing and distributing system (36, 38, 40, 42, 66, 72) for mixing the cold air flow and the hot air flow and for distributing the flow of air towards the front and rear seats, the mixing and distributing system being arranged so to allow a separate adjustment for mixing and distributing the air flow to the front seats and to the rear seats,
**characterised in that** it comprises
- a rear seat air flow mixing chamber (54), which communicates with the hot flow collection chamber (28), and
- rear seat cold flow collection channel (60), which extends under said heating unit (18, 20), of which one end communicates with said cold flow collection chamber (26) and a second end with the rear seat mixing chamber (54).

2. Unit according to claim 1, **characterised in that** it comprises a mixing flap (66) arranged on said first end (62) of said rear seat cold flow collection channel (60).

3. Unit according to claim 1, **characterised in that** it comprises a flap (56) for controlling the fast windscreen defrosting function, arranged near an aperture (56) between the air cold flow collection chamber (28) and the rear seat mixing chamber (54).

4. Unit according to claim 1, **characterised in that** the rear seat mixing chamber (54) communicates with a pair of outlet conduits (68, 70) destined to convey the air flows to the upper part and to the feet of the rear seat passengers, respectively,

5. Unit according to claim 4, **characterised in that** it comprises an adjustable distribution flap (72) arranged in said mixing chamber (54) suitable for adjusting the flow directed towards said outlet conduits (68, 70).

6. Unit according to claim 4, **characterised in that** it comprises a longitudinal separation wall splitting the unit (10) in the longitudinal direction into two areas which can be used to separately mix and distribute the air flows destined to the driver and to the front seat passenger in the motor vehicle.
